(19) Europäisches Patentamt
European Patent Office
Office européen des brevets

(11) EP 4 317 234 A1

(12) # EUROPEAN PATENT APPLICATION
published in accordance with Art. 153(4) EPC

(43) Date of publication:
**07.02.2024 Bulletin 2024/06**

(21) Application number: **22780475.4**

(22) Date of filing: **24.03.2022**

(51) International Patent Classification (IPC):
***C08G 59/18*** (2006.01) ***C09J 4/02*** (2006.01)
***C09J 11/06*** (2006.01) ***G03B 11/04*** (2021.01)
***G03B 17/02*** (2021.01) ***C08K 5/37*** (2006.01)
***C08L 101/06*** (2006.01) ***C09J 163/00*** (2006.01)
***C08L 63/00*** (2006.01) ***C08G 75/045*** (2016.01)
***C08K 3/013*** (2018.01) ***G02B 7/02*** (2021.01)

(52) Cooperative Patent Classification (CPC):
**C08G 59/18; C08G 75/045; C08K 3/013; C08K 5/37; C08L 63/00; C08L 101/06; C09J 4/00; C09J 11/06; C09J 163/00; G02B 7/02; G03B 11/04; G03B 17/02**

(86) International application number:
**PCT/JP2022/013960**

(87) International publication number:
**WO 2022/210261 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.03.2021 JP 2021057307**

(71) Applicant: **Namics Corporation**
**Niigata-shi, Niigata 950-3131 (JP)**

(72) Inventors:
- **ABE Nobuyuki**
  **Niigata-shi, Niigata 950-3131 (JP)**
- **MARUYAMA Kazuyuki**
  **Niigata-shi, Niigata 950-3131 (JP)**

(74) Representative: **Hoffmann Eitle**
**Patent- und Rechtsanwälte PartmbB**
**Arabellastraße 30**
**81925 München (DE)**

(54) **CURABLE RESIN COMPOSITION**

(57) The present invention provides a curable resin composition which gives a cured product with lowered surface gloss, and a sealing material comprising the same. The present invention also provides a cured product obtained by curing the curable resin composition or sealing material. The present invention further provides a camera module comprising the cured product.

Fig. 4

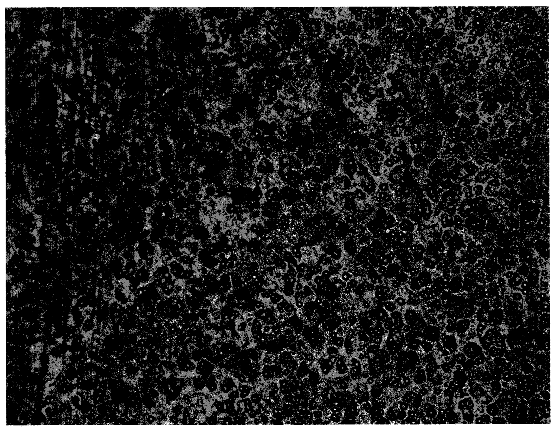

EP 4 317 234 A1

## Description

### Technical Field

The present invention relates to a curable resin composition, an adhesive comprising the same, a cured product obtained by curing the same, and a camera module comprising the cured product.

### Background Art

An adhesive to be cured by preliminary curing by ultraviolet (UV) irradiation followed by final curing by heating (hereinbelow referred to as a "UV-heat curable adhesive") is used in many fields, particularly in uses of a semiconductor device, in particular a camera module (see, for example, Patent Documents 1 and 2). In the assembly of a camera module, positioning of each part must be conducted with high accuracy. Therefore, use of the UV-heat curable adhesive, which enables temporary fixing by preliminary curing, may improve production efficiency.

An adhesive comprising a polyfunctional acrylate compound and a polyfunctional thiol compound is known as the UV-heat curable adhesive. Such an adhesive cures by ene-thiol reaction (radical addition of a thiol group to a double bond in a (meth)acryloyloxy group), homopolymerization (radical polymerization of a (meth)acryloyloxy group) and Michael addition reaction (nucleophilic addition of a thiol group to a double bond in a (meth)acryloyloxy group).

In the meantime, suppression of flare is important for performance improvement of a camera. Flare refers to a phenomenon of unexpected appearance of light in an image and/or video (in which the light is not originally present) taken by a camera, as a result of unintended reflection of incident light into the camera occurred at the lens surface, the barrel or some other portion in the camera.

### Prior Art Documents

#### Patent Documents

Patent Document 1: WO 2016/143815
Patent Document 2: WO 2016/143777
Patent Document 3: JP H10-275964

### Summary of Invention

#### Problems to Be Solved by the Invention

As describe above, an adhesive is used in the production of a camera module. Conventionally, reflection of light from the cured product produced by curing of the adhesive has rarely been considered as a problem. However, because of recent enlargement of a CMOS image sensor, the sensor tends to be placed in a position close to this cured product. Further, demands for photographs and videos with higher picture quality are becoming increased. As a result, reflection of light on the surface of the cured product given by the adhesive is becoming a problem. This problem is pronounced particularly in a camera module used in a device like a smart phone, tablet computer, laptop computer and the like.

A conventional UV-heat curable adhesive gives a cured product with gloss on the surface thereof. Currently, this is rarely considered as a problem. However, as described above, there is a growing need for prevention of problems in a camera module, such as flare. Under this situation, desired is improvement of properties of a UV-heat curable adhesive for lowering surface gloss of the cured product.

Patent Document 3 describes a flexible printed-circuit board used as a means for transmitting signals in a camera, the flexible printed-circuit board having an anti-reflection layer or film for preventing flare, ghost or the like due to reflection of leakage light caused by the flexible printed-circuit board, and a camera in which the reflection is prevented by the flexible printed-circuit board. However, from the viewpoint of production efficiency, a method in which the anti-reflection film is applied or the anti-reflection layer is provided is not preferred. Further, Patent Document 3 describes an anti-reflection layer and film, not a liquid adhesive.

The present invention was made in view of the above-mentioned problems, and an object of the present invention is to provide a curable resin composition which gives a cured product with lowered surface gloss utilizing new mechanism, and a sealing material comprising the same. Another object of the present invention is to provide a cured product obtained by curing the curable resin composition or sealing material. A further object of the present invention is

to provide a camera module comprising the cured product.

Means to Solve the Problem

Under these circumstances, the present inventors carried out intensive research to develop a curable resin composition which gives a cured product with lowered surface gloss. As a result, it has unexpectedly been found that use of a curable resin composition which comprises, in addition to a polyfunctional thiol compound and a compound having a (meth)acrylate group which reacts with this compound, a thermosetting resin other than the latter compound, which resin is capable of reacting with the former compound, such as an epoxy resin, in a specific amount, results in extremely lowered surface gloss of the cured product given by the composition. Based on the new findings above, the present invention has been completed.

That is, the present invention includes, but is not limited to, the following inventions.

[1] A curable resin composition comprising the following (A) to (D):

(A) a polyfunctional thiol compound;
(B) a compound having a (meth)acrylate group;
(C) a thermosetting resin having a functional group capable of reacting with the (A) polyfunctional thiol compound but no (meth)acrylate group; and
(D) a photoradical initiator,
wherein:

$$\text{[Mass of (C) thermosetting resin] / ([Mass of (B) compound having a (meth)acrylate group] + [Mass of (C) thermosetting resin]) = 0.20 to 0.65.}$$

[2] The curable resin composition according to item 1 above, wherein:

$$\text{[Mass of (C) thermosetting resin] / ([Mass of (B) compound having a (meth)acrylate group] + [Mass of (C) thermosetting resin]) = 0.30 to 0.60.}$$

[3] The curable resin composition according to item 1 or 2 above, wherein:

$$\text{([Total number of (meth)acrylate groups contained in (B) compound having a (meth)acrylate group] + [Total number of the functional groups contained in (C) thermosetting resin, the functional groups capable of reacting with (A) polyfunctional thiol compound]) / [Total number of thiol groups contained in (A) polyfunctional thiol compound] = 0.5 to 1.5.}$$

[4] The curable resin composition according to any one of items 1 to 3 above, wherein (B) compound having a (meth)acrylate group comprises a polyfunctional acrylate compound.
[5] The curable resin composition according to any one of items 1 to 4 above, wherein (C) thermosetting resin comprises an epoxy resin.
[6] The curable resin composition according to any one of items 1 to 5 above, which further comprises (E) a curing catalyst.
[7] The curable resin composition according to any one of items 1 to 6 above, which further comprises (F) a pigment.
[8] The curable resin composition according to item 7 above, wherein (F) pigment comprises a black pigment.
[9] The curable resin composition according to any one of items 1 to 8 above, which further comprises (G) a filler.
[10] The curable resin composition according to any one of items 1 to 9 above, which gives a cured product with a specular glossiness of 15 % or less measured at an incident angle of 60 degrees in accordance with the provisions of JIS Z 8741.
[11] The curable resin composition according to any one of items 1 to 10 above for adhering, in a camera module, a folder to a substrate, a lens barrel to a folder, or an optical filter to a folder.
[12] An adhesive comprising the curable resin composition of any one of items 1 to 11 above.

[13] A cured product of the curable resin composition of any one of items 1 to 11 above or the adhesive of item 12 above.

[14] A camera module comprising the cured product of item 13 above.

## Effect of the Invention

The curable resin composition of the present invention comprises, in addition to a polyfunctional thiol compound and a compound having a (meth)acrylate group which reacts with this compound, a thermosetting resin other than the latter compound, which resin is capable of reacting with the former compound, such as an epoxy resin, in a specific amount. Therefore, the curable resin composition of the present invention gives a cured product with lowered surface gloss. Such a curable resin composition is extremely useful in the production of various semiconductor devices for use in which reflection of light on the surface of the cured product given by the composition may be a problem, especially a camera module.

## Brief Description of the Drawings

[FIG. 1] Figure 1 is an example of a cross-section of a camera module.

[FIG. 2] Figure 2 is a photograph showing the appearance of cured product A obtained by curing the curable resin composition of Example 4.

[FIG. 3] Figure 3 is a photograph showing the appearance of cured product B obtained by curing the curable resin composition of Comparative Example 1.

[FIG. 4] Figure 4 is an optical micrograph (object lens magnification: 20) of the surface of cured product A obtained by curing the curable resin composition of Example 4.

[FIG. 5] Figure 5 is an optical micrograph (object lens magnification: 20) of the surface of cured product B obtained by curing the curable resin composition of Comparative Example 1.

## Description of Embodiments

The prevent invention is described below in detail.

As described above, the curable resin composition of the present invention comprises, as essential components, (A) a polyfunctional thiol compound, (B) a compound having a (meth)acrylate group, (C) a thermosetting resin having a functional group capable of reacting with the (A) polyfunctional thiol compound but no (meth)acrylate group, and (D) a photoradical initiator. Explanation is made below with respect to these (A) to (D).

As used herein, the term "resin" refers not only to a polymer (especially a synthetic polymer) but also molecules before curing used for producing a polymer. For example, an "epoxy resin" includes a material such as a monomer before curing which has an epoxy group.

As used herein, the name "(meth)acrylic acid", "(meth)acrylate", "(meth)acryl", "(meth)acryloyl" or the like may be used as a term collectively meaning "acrylic acid" (or its derivative) and "methacrylic acid" (or its derivative). Each of these terms may be used as an independent term or a portion of another term. For example, the term "(meth)acrylic acid" means "acrylic acid and/or methacrylic acid" and the term "(meth)acryloyloxy group" means "acryloyloxy group and/or methacryloyloxy group".

As used herein, "camera" means a device for optical imaging equipped with an optical system for forming an image including a lens and the like, and the imaging wavelength range thereof includes the visible light range, infrared range and ultraviolet range. Therefore, the "camera" includes not only a camera mainly for imaging in the visible light range, such as that used in a device like a smart phone, tablet computer, laptop computer or the like, but also a camera for detection of a wavelength in the (near) infrared range, such as a thermal camera and a camera used in a ToF (Time of Flight) device for measuring the distance to an object, and the like. There is no particular limitation with respect to the use of the camera, and the camera is not limited to that for use in a device, such as a smart phone, and may be for automobile use, for use in tallying (surveying) / inspection in a factory, for use in monitoring of inside and/or outside of a building, and the like. As used herein, a "camera module" is a device which is the modularized main part of the above-mentioned camera.

### (A) Polyfunctional thiol compound

The curable resin composition of the present invention comprises at least one polyfunctional thiol compound.

There is no particular limitation with respect to the polyfunctional thiol compound used in the present invention

as long as the compound has 2 or more thiol groups. The polyfunctional thiol compound comprises preferably a thiol compound having 3 or more thiol groups, more preferably a thiol compound having 3 thiol groups (trifunctional thiol compound) and/or a thiol compound having 4 thiol groups (tetrafunctional thiol compound).

In one embodiment of the present invention, the polyfunctional thiol compound comprises a thiol compound having 3 thiol groups. In another embodiment of the present invention, the polyfunctional thiol compound comprises a thiol compound having 4 thiol groups. The thiol equivalent weight of the polyfunctional thiol compound is preferably from 90 to 150 g/eq, more preferably from 90 to 140 g/eq.

In one embodiment of the present invention, from the perspective of improving the moisture resistance of the cured product, it is preferred that the polyfunctional thiol compound comprises a non-hydrolyzable polyfunctional thiol compound that does not have a hydrolyzable partial structure such as an ester bond. Non-hydrolyzable polyfunctional thiol compounds do not readily undergo hydrolysis even in high temperature and high humidity environments.

Examples of hydrolyzable polyfunctional thiol compounds include trimethylolpropane tris(3-mercaptopropionate) (TMMP; manufactured by SC Organic Chemical Co., Ltd.), tris[(3-mercaptopropionyloxy)-ethyl]-isocyanurate (TEMPIC; manufactured by SC Organic Chemical Co., Ltd.), pentaerythritol tetrakis(3-mercaptopropionate) (PEMP; manufactured by SC Organic Chemical Co., Ltd.), tetraethyleneglycol bis(3-mercaptopropionate) (EGMP-4; manufactured by SC Organic Chemical Co., Ltd.), dipentaerythritol hexakis(3-mercaptopropionate) (DPMP; manufactured by SC Organic Chemical Co., Ltd.), pentaerythritol tetrakis(3-mercaptobutyrate) (Karenz MT® PE1; manufactured by Showa Denko K.K.), 1,3,5-tris(3-mercaptobutyryloxyethyl)-1,3,5-triazine-2,4,6(1H,3H,SH)-trione (Karenz MT® NR1; Showa Denko K.K.) and the like.

Preferred non-hydrolyzable polyfunctional thiol compounds that may be used in the present invention are compounds represented by formula (1) below:

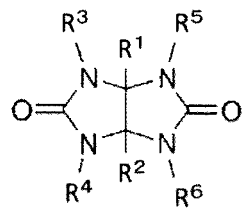 (1)

wherein

- $R^1$ and $R^2$ are, each independently, selected from the group consisting of a hydrogen atom, an alkyl group having 1 to 12 carbon atoms or a phenyl group; and
- $R^3$, $R^4$, $R^5$ and $R^6$ are, each independently, selected from the group consisting of a mercaptomethyl group, a mercaptoethyl group and a mercaptopropyl group.

Examples of compounds represented by formula (1) include 1,3,4,6-tetrakis(2-mercaptoethyl)glycoluril (trade name: TS-G, manufactured by Shikoku Chemicals Corporation), 1,3,4,6-tetrakis(3-mercaptopropyl)glycoluril (trade name: C3 TS-G, manufactured by Shikoku Chemicals Corporation), 1,3,4,6-tetrakis-(mercaptomethyl)glycoluril, 1,3,4,6-tetrakis(mercaptomethyl)-3a-methylglycoluril, 1,3,4,6-tetrakis(2-mercaptoethyl)-3a-methylglycoluril, 1,3,4,6-tetrakis(3-mercaptopropyl)-3a-methylglycoluril, 1,3,4,6-tetrakis(mercaptomethyl)-3a, 6a-dimethylglycoluril, 1,3,4,6-tetrakis(2-mercaptoethyl)-3a,6a-dimethylglycoluril, 1,3,4,6-tetrakis(3-mercaptopropyl)-3a,6a-dimethylglycoluril, 1,3,4,6-tetrakis-(mercaptomethyl)-3 a,6a-diphenylglycoluril, 1,3,4,6-tetrakis(2-mercaptoethyl)-3 a,6a-diphenylglycoluril, 1,3,4,6-tetrakis(3-mercaptopropyl)-3a,6a-diphenylglycoluril and the like. These can be used individually or in combination. Among these, 1,3,4,6-tetrakis(2-mercaptoethyl)glycoluril and 1,3,4,6-tetrakis(3-mercaptopropyl)glycoluril are particularly preferred.

Other preferred non-hydrolyzable polyfunctional thiol compounds that may be used in the present invention are compounds represented by formula (2) below:

$$(R^8)_m\text{-A-}(R^7\text{-SH})_n \qquad (2)$$

wherein:

- A is a residue of a polyhydric alcohol having n+m hydroxyl groups, and comprises n+m oxygen atoms derived from the hydroxyl groups,
- each $R^7$ is, independently, an alkylene group having 1 to 10 carbon atoms,
- each $R^8$ is, independently, a hydrogen atom or an alkyl group having 1 to 10 carbon atoms,
- m is an integer greater than or equal to 0,

n is an integer greater than or equal to 3, and
$R^7$ and $R^8$ are each bonded to A via one of the oxygen atoms.

Two or more compounds represented by formula (2) may be used in combination. Examples of the compounds represented by formula (2) include pentaerythritol tripropanethiol (trade name: Multhiol Y-3, manufactured by SC Organic Chemical Co., Ltd.), pentaerythritol tetrapropanethiol, and the like. Of these, pentaerythritol tripropanethiol is particularly preferred.

As the non-hydrolyzable polyfunctional thiol compound, tri- or more-functional polythiol compounds having two or more sulfide bonds within the molecule may also be used. Examples of such thiol compounds include aliphatic polythiol compounds such as 1,2,3-tris(mercaptomethylthio)propane, 1,2,3-tris(2-mercaptoethylthio)propane, 1,2,3-tris(3-mercaptopropylthio)propane, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, tetrakis(mercaptomethylthiomethyl)methane, tetrakis(2-mercaptoethylthiomethyl)methane, tetrakis(3-mercaptopropylthiomethyl)methane, 1,1,3,3-tetrakis(mercaptomethylthio)propane, 1,1,2,2-tetrakis(mercaptomethylthio)ethane, 1,1,5,5-tetrakis(mercaptomethylthio)-3-thiapentane, 1,1,6,6-tetrakis(mercaptomethylthio)-3,4-dithiahexane, 2,2-bis(mercaptomethylthio)ethanethiol, 3-mercaptomethylthio-1,7-dimercapto-2,6-dithiaheptane, 3,6-bis(mercaptomethylthio)-1,9-dimercapto-2,5,8-trithianonane, 3-mercaptomethylthio-1,6-dimercapto-2,5-dithiahexane, 1,1,9,9-tetrakis(mercaptomethylthio)-5-(3,3-bis(mercaptomethylthio)-1-thiapropyl)-3,7-dithianonane, tris(2,2-bis(mercaptomethylthio)ethyl)methane, tris(4,4-bis(mercaptomethylthio)-2-thiabutyl)methane, tetrakis(2,2-bis(mercaptomethylthio)ethyl)methane, tetrakis(4,4-bis(mercaptomethylthio)-2-thiabutyl)methane, 3,5,9,11-tetrakis(mercaptomethylthio)-1,13-dimercapto-2,6,8,12-tetrathiatridecane, 3,5,9,11,15,17-hexakis(mercaptomethylthio)-1,19-dimercapto-2,6,8,12,14,18-hexathianonadecane, 9-(2,2-bis(mercaptomethylthio)ethyl)-3,5,13,15-tetrakis(mercaptomethylthio)-1,17-dimercapto-2,6,8,10,12,16-hexathiaheptadecane, 3,4,8,9-tetrakis(mercaptomethylthio)-1,11-dimercapto-2,5,7,10-tetrathiaundecane, 3,4,8,9,13,14-hexakis(mercaptomethylthio)-1,16-dimercapto-2,5,7,10,12,15-hexathiahexadecane, 8-[bis(mercaptomethylthio)methyl]-3,4,12,13-tetrakis(mercaptomethylthio)-1,15-dimercapto-2,5,7,9,11,14-hexathiapentadecane, 4,6-bis[3,5-bis(mercaptomethylthio)-7-mercapto-2,6-dithiaheptylthio]-1,3-dithiane, 4-[3,5-bis(mercaptomethylthio)-7-mercapto-2,6-dithiaheptylthio]-6-mercaptomethylthio-1,3-dithiane, 1,1-bis[4-(6-mercaptomethylthio)-1,3-dithianylthio]-1,3-bis(mercaptomethylthio)propane, 1-[4-(6-mercaptomethylthio)-1,3-dithianylthio]-3-[2,2-bis(mercaptomethylthio)ethyl]-7,9-bis(mercaptomethylthio)-2,4,6,10-tetrathiaundecane, 3-[2-(1,3-dithietanyl)]methyl-7,9-bis(mercaptomethylthio)-1,11-dimercapto-2,4,6,10-tetrathiaundecane, 9-[2-(1,3-dithietanyl)]methyl-3,5,13,15-tetrakis(mercaptomethylthio)-1,17-dimercapto-2,6,8,10,12,16-hexathiaheptadecane, 3-[2-(1,3-dithietanyl)]methyl-7,9,13,15-tetrakis(mercaptomethylthio)-1,17-dimercapto-2,4,6,10,12,16-hexathiaheptadecane and the like; and polythiol compounds having a cyclic structure such as 4,6-bis[4-(6-mercaptomethylthio)-1,3-dithianylthio]-6-[4-(6-mercaptomethylthio)-1,3-dithianylthio]-1,3-dithiane, 4-[3,4,8,9-tetrakis(mercaptomethylthio)-11-mercapto-2,5,7,10-tetrathiaundecyl]-5-mercaptomethylthio-1,3-dithiolane, 4,5-bis[3,4-bis(mercaptomethylthio)-6-mercapto-2,5-dithiahexylthio]-1,3-dithiolane, 4-[3,4-bis(mercaptomethylthio)-6-mercapto-2,5-dithiahexylthio]-5-mercaptomethylthio-1,3-dithiolane, 4-[3-bis(mercaptomethylthio)methyl-5,6-bis(mercaptomethylthio)-8-mercapto-2,4,7-trithiaoctyl]-5-mercaptomethylthio-1,3-dithiolane, 2-{bis[3,4-bis(mercaptomethylthio)-6-mercapto-2,5-dithiahexylthio]methyl}-1,3-dithietane, 2-[3,4-bis(mercaptomethylthio)-6-mercapto-2,5-dithiahexylthio]mercaptomethylthiomethyl-1,3-dithietane, 2-[3,4,8,9-tetrakis(mercaptomethylthio)-11-mercapto-2,5,7,10-tetrathiaundecylthio]mercaptomethylthiomethyl-1,3-dithietane, 2-[3-bis(mercaptomethylthio)methyl-5,6-bis(mercaptomethylthio)-8-mercapto-2,4,7-trithiaoctyl]mercaptomethylthiomethyl-1,3-dithietane, 4-{1-[2-(1,3-dithietanyl)]-3-mercapto-2-thiapropylthio}-5-[1,2-bis(mercaptomethylthio)-4-mercapto-3-thiabutylthio]-1,3-dithiolane and the like.

These polyfunctional thiol compounds can be used individually or in combination.

(B) Compound having a (meth)acrylate group

The curable resin composition of the present invention comprises at least one compound having a (meth)acrylate group, i.e., a compound having a structure in which one molecule of a compound having at least one hydroxyl group is esterified with at least one molecule of (meth)acrylic acid (an unesterified hydroxyl group may be present). It should be noted that a silane coupling agent having a (meth)acrylate group is not included in the compound having a (meth)acrylate group. It is preferred that the compound having a (meth)acrylate group contains no silicon atom. The compound having a (meth)acrylate group used in the present invention may comprise a compound having only one (meth)acrylate group, i.e., a monofunctional (meth)acrylate compound, but preferably comprises a compound having two or more (meth)acrylate groups, i.e., a polyfunctional (meth)acrylate compound. In one embodiment of the present invention, the compound having a (meth)acrylate group comprises a polyfunctional (meth)acrylate compound. The polyfunctional (meth)acrylate compound is preferably bifunctional to tetrafunctional, more preferably bifunctional. Too large number of (meth)acrylate groups in one molecule may result in unsatisfactorily suppressed flare, since the crosslink density becomes too high at

the time of preliminary curing by UV irradiation and, after that, deformation of the product of the preliminary curing at the time of curing by heating becomes difficult. From the viewpoint of lowered viscosity of the curable resin composition, the molecular weight of the compound having a (meth)acrylate group is preferably 100 to 5000, more preferably 200 to 3000.

The compound having a (meth)acrylate group may contain a (meth)acryloyl group which is not in the form of a (meth)acryloyloxy group, as long as the compound satisfies the above-mentioned structural requirements.

As examples of compounds having a (meth)acrylate group, there can be mentioned:

- di(meth)acrylate of bisphenol A (or a PEGylate thereof);
- di(meth)acrylate of dimethyloltricyclodecane;
- di(meth)acrylate of tris(2-hydroxyethyl)isocyanurate;
- tri(meth)acrylate of tris(2-hydroxyethyl)isocyanurate;
- tri(meth)acrylate of trimethylolpropane, or an oligomer thereof;
- poly(meth)acrylate of ditrimethylolpropane;
- tri(meth)acrylate of pentaerythritol, or an oligomer thereof;
- poly(meth)acrylate of dipentaerythritol;
- polyester acrylate (polyfunctional)

and the like.

As other examples, there can be mentioned:

- poly(meth)acrylate of tris(acryloxyethyl)isocyanurate;
- poly(meth)acrylate of caprolactone-modified tris(acryloxyethyl)isocyanurate;
- poly(meth)acrylate of caprolactone-modified tris(methacryloxyethyl)isocyanurate;
- poly(meth)acrylate of alkyl-modified dipentaerythritol;
- poly(meth)acrylate of caprolactone-modified dipentaerythritol and the like.

Examples of commercially available compounds having a (meth)acrylate group include a polyester acrylate manufactured by Toagosei Co., Ltd. (trade name: ARONIX M7100), dimethylol tricyclodecane diacrylate manufactured by Kyoeisha Chemical Co., Ltd. (trade name: Light Acrylate DCP-A), a polyester acrylate manufactured by Daicel-Allnex Ltd. (trade name: EBECRYL 810) and the like.

These compounds having a (meth)acrylate group can be used individually or in combination.

(C) Thermosetting resin

The curable resin composition of the present invention comprises a thermosetting resin having a functional group capable of reacting with the above-mentioned polyfunctional thiol compound (more exactly, a thiol group therein) but no (meth)acrylate group. The functional group capable of reacting with a thiol group (excluding a (meth)acrylate group) may be hereinbelow referred to as a "reactive functional group". The reactive functional group includes, in addition to an epoxy group, a functional group having a double bond, such as a maleimide group, and in the present invention, it is preferred that the reactive functional group is an epoxy group. In one embodiment of the present invention, the thermosetting resin comprises an epoxy resin or a maleimide resin, preferably an epoxy resin.

Explanation is made below with respect to the epoxy resins which can be used in the present invention.

Epoxy resins are roughly classified into monofunctional epoxy resins and polyfunctional epoxy resins. In the present invention, it is preferred that the epoxy resin comprises a polyfunctional epoxy resin. In one embodiment of the present invention, the epoxy resin comprises a polyfunctional epoxy resin and a monofunctional epoxy resin.

A monofunctional epoxy resin is an epoxy resin having one epoxy group. Examples of monofunctional epoxy resins include, but are not limited to, n-butyl glycidyl ether, 2-ethylhexyl glycidyl ether, phenyl glycidyl ether, cresyl glycidyl ether, p-s-butylphenyl glycidyl ether, styrene oxide, $\alpha$-pinene oxide, 4-tert-butylphenyl glycidyl ether, neodecanoic acid glycidyl ester, 2-(4,4-dimethylpentan-2-yl)-5,7,7-trymethyloctanoic acid glycidyl ester and the like. These resins can be used individually or in combination.

A polyfunctional epoxy resin is an epoxy resin having two or more epoxy groups. The polyfunctional epoxy resins are roughly classified into aliphatic polyfunctional epoxy resins and aromatic polyfunctional epoxy resins. The aliphatic polyfunctional epoxy resin is a polyfunctional epoxy resin having a structure with no aromatic ring. Examples of aliphatic polyfunctional epoxy resins include, but are not limited to:

- diepoxy resins such as (poly)ethylene glycol diglycidyl ether, (polypropylene glycol diglycidyl ether, butanediol diglycidyl ether, neopentyl glycol diglycidyl ether, 1,6-hexanediol diglycidyl ether, trimethylolpropane diglycidyl ether,

polytetramethylene ether glycol diglycidyl ether, glycerin diglycidyl ether, neopentyl glycol diglycidyl ether, 1,2-epoxy-4-(2-methyloxiranyl)-1-methylcyclohexane, cyclohexane-based diglycidyl ethers, and dicyclopentadiene-based diglycidyl ethers;

- triepoxy resins such as trimethylolpropane triglycidyl ether, and glycerin triglycidyl ether;
- alicyclic epoxy resins such as vinyl (3,4-cyclohexene)dioxide, 2-(3,4-epoxycyclohexyl)-5,1-spiro-(3,4-epoxycyclohexyl)-m-dioxane;
- glycidylamine-based epoxy resins such as tetraglycidyl bis(aminomethyl)cyclohexane;
- hydantoin-based epoxy resins such as 1,3-diglycidyl-5-methyl-5-ethylhydantoin; and
- epoxy resins having a silicone backbone such as 1,3-bis(3-glycidoxypropyl)-1,1,3,3-tetramethyldisiloxane.

These resins can be used individually or in combination.

The aromatic polyfunctional epoxy resin is a polyfunctional epoxy resin having a structure with an aromatic ring. There are many epoxy resins of this type that have conventionally been used frequently, such as bisphenol A-based epoxy resins. Examples of aromatic polyfunctional epoxy resins include, but are not limited to:

- bisphenol A-based epoxy resins;
- branched polyfunctional bisphenol A-based epoxy resins such as p-glycidyloxyphenyldimethyl trisbisphenol A diglycidyl ether;
- bisphenol F-based epoxy resins;
- novolac-based epoxy resins;
- tetrabromobisphenol A-based epoxy resins;
- fluorene-based epoxy resins;
- biphenyl aralkyl epoxy resins;
- diepoxy resins such as 1,4-phenyldimethanol diglycidyl ether;
- biphenyl-based epoxy resins such as 3,3',5,5'-tetramethyl-4,4'-diglycidyloxybiphenyl;
- glycidylamine-based epoxy resins such as diglycidylaniline, diglycidyltoluidine, triglycidyl-p-aminophenol, tetraglycidyl-m-xylylenediamine; and
- naphthalene ring-containing epoxy resins.

These resins can be used individually or in combination.

The epoxy equivalent weight of the epoxy resin is preferably 90 to 500 g/eq, more preferably 100 to 450 g/eq, still more preferably 100 to 300 g/eq.

Incidentally, a silane coupling agent having a functional group, such as an epoxy group, is not included in the thermosetting resin. It is preferred that the thermosetting resin contains no silicon atom.

(D) Photoradical initiator

The curable resin composition of the present invention comprises a photoradical initiator. By the use of a photoradical initiator, preliminary curing of the curable resin composition of the present invention by UV irradiation becomes possible. There is no particular limitation with respect to the photoradical initiator which may be used in the present invention, and any conventionally known initiators can be used. As examples of the photoradical initiators, there can be mentioned 1-hydroxycyclohexyl phenyl ketone, 2-hydroxy-2-methyl-1-phenylpropan-1-one, diethoxyacetophenone, 1-(4-isopropylphenyl)-2-hydroxy-2-methylpropan-1 -one, 1-(4-dodecylphenyl)-2-hydroxy-2-methylpropan-1-one, 4-(2-hydroxyethoxy)phenyl-(2-hydroxy-2-propyl)ketone, 2-methyl-1-[4-(methylthio)phenyl]-2-morpholinopropan-1-one, benzoin, benzoin methylether, benzoin ethylether, benzoin isopropylether, benzoin n-butylether, benzoin phenylether, benzyl dimethylketal, benzophenone, benzoylbenzoic acid, methyl benzoylbenzoate, 4-phenylbenzophenone, hydroxybenzophenone, an acrylated benzophenone, 4-benzoyl-4'-methyldiphenylsulfide, 3,3'-dimethyl-4-methoxybenzophenone, thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4,-diisopropylthioxanthone, 2,4,6-trimethylbenzoyldiphenylphosphine oxide, methyl phenyl glyoxylate, benzyl, and camphorquinone. These initiators can be used individually or in combination. The amount of the photoradical initiator is preferably from 0.01 to 10 % by mass, more preferably from 0.05 to 5 % by mass, still more preferably from 0.1 to 3 % by mass, based on the amount of the curable resin composition.

In the curable resin composition of the present invention, the masses of the above-mentioned (B) compound having a (meth)acrylate group and (C) thermosetting resin satisfy the predetermined relationship. Specifically, these masses satisfy the relationship represented by the following formula:

$$[\text{Mass of (C) thermosetting resin}] / ([\text{Mass of (B) compound having a (meth)acrylate group}] + [\text{Mass of (C) thermosetting resin}]) = 0.20 \text{ to } 0.65.$$

When the above ratio is more than 0.65, the adhesive strength after the preliminary curing by UV irradiation is unsatisfactory. When the above ratio is less than 0.20, the surface gloss of the obtained cured product is not lowered.

Gloss may be detected by a gloss meter even when no gloss is judged to be found by visual observation on the surface of the cured product. Therefore, it is more preferred that the specular glossiness measured by a gloss meter is low. In the present invention, in view of satisfying both of improvement of the adhesive strength after the preliminary curing by UV irradiation and lowering of the specular glossiness of the obtained cured product, it is preferred that these masses satisfy the relationship represented by the following formula:

$$[\text{Mass of (C) thermosetting resin}] / ([\text{Mass of (B) compound having a (meth)acrylate group}] + [\text{Mass of (C) thermosetting resin}]) = 0.30 \text{ to } 0.60.$$

It is more preferred that the above ratio is 0.40 to 0.60.

In the curable resin composition of the present invention, it is preferred that the total number of thiol groups contained in the (A) polyfunctional thiol compound, the total number of (meth)acrylate groups contained in the (B) compound having a (meth)acrylate group and the total number of the functional groups contained in the (C) thermosetting resin, the functional groups capable of reacting with (A) polyfunctional thiol compound (reactive functional groups), satisfy the predetermined relationship. Specifically, it is preferred that:

$$([\text{Total number of (meth)acrylate groups contained in the (B) compound having a (meth)acrylate group}] + [\text{Total number of the functional groups contained in the (C) thermosetting resin, the functional groups capable of reacting with (A) polyfunctional thiol compound}]) / [\text{Total number of thiol groups contained in the (A) polyfunctional thiol compound}] = 0.5 \text{ to } 1.5.$$

This ratio is more preferably 0.6 to 1.4, still more preferably 0.8 to 1.2. Satisfaction of such a relationship shows that the amounts of the (meth)acrylate groups, reactive functional groups and thiol groups remaining unreacted in the cured product after the curing reaction are relatively small. When the amount of unreacted groups remaining in the cured product is small, formation of new crosslinking is difficult even when the cured product is used under high-temperature conditions, and the physical properties of the cured product are stable.

The total number of thiol groups contained in (A) polyfunctional thiol compound is the quotient of the mass (g) of the polyfunctional thiol compound contained in (A) polyfunctional thiol compound divided by the thiol equivalent weight of the polyfunctional thiol compound. If a plurality of polyfunctional thiol compounds are contained, the total number of thiol groups is the sum of such quotients for each polyfunctional thiol compound. The thiol equivalent weight can be determined by iodometric titration. This method is widely known and is disclosed, for example, in paragraph 0079 of Japanese Patent Application Laid-Open Publication No. 2012-153794. If the thiol equivalent weight cannot be determined using this method, it may be calculated as the quotient of the molecular weight of the thiol compound divided by the number of thiol groups in one molecule of the thiol compound.

The total number of (meth)acrylate groups contained in (B) compound having a (meth)acrylate group is the quotient of the mass (g) of the compound having a (meth)acrylate group contained in (B) compound having a (meth)acrylate group divided by the (meth)acrylate equivalent weight of the compound. If a plurality of compounds having a (meth)acrylate group are contained, the total number of (meth)acrylate groups is the sum of such quotients for each of these compounds. The (meth)acrylate equivalent weight is calculated as the quotient of the molecular weight of the compound having a (meth)acrylate group divided by the number of (meth)acrylate groups in one molecule of the compound.

The total number of the reactive functional groups contained in (C) thermosetting resin is the quotient of the mass (g) of the thermosetting resin contained in (C) thermosetting resin divided by the reactive functional group equivalent weight of the thermosetting resin (if a plurality of types of reactive functional groups are contained, the sum of such quotient for each reactive functional group). If a plurality of types of thermosetting resins are contained, the total number of the reactive functional groups is the sum of such quotients for each of the thermosetting resins.

When the reactive functional group is an epoxy group, the epoxy equivalent weight can be determined by the

method described in JIS K7236. If the epoxy equivalent weight cannot be determined using this method, it may be calculated as the quotient of the molecular weight of the thermosetting resin under consideration divided by the number of epoxy groups in one molecule of the thermosetting resin.

Even when the reactive functional group is a group other than an epoxy group, it is easy for a person skilled in the art to obtain the total number of the reactive functional groups.

The curable resin composition of the present invention may contain optional components other than the above-mentioned (A) to (D), such as those mentioned below, if desired.

• Curing catalyst

The curable resin composition of the present invention may, if desired, comprise a curing catalyst. The curing catalyst is used for curing the above-mentioned (C) thermosetting resin. By the use of the curing catalyst, the curable resin composition of the present invention can be cured in a short time even under low-temperature conditions. When the curable resin composition of the present invention comprises the curing catalyst, there is no particular limitation with respect to the curing catalyst and any conventionally known catalysts may be used, as long as the curing catalyst is capable of curing the above-mentioned (C) thermosetting resin.

For example, when (C) thermosetting resin comprises an epoxy resin, an appropriate curing catalyst selected from conventionally known curing catalysts for an epoxy resin may be used. It is preferred that the curing catalyst for an epoxy resin is a latent curing catalyst. A latent curing catalyst is a compound that is inactive at room temperature and is activated upon heating to function as a curing catalyst. As examples of curing catalysts for an epoxy resin, there can be mentioned imidazole compounds that are solid at room temperature; solid dispersion-type amine adduct-based latent curing catalysts such as a reaction product of an amine compound and an epoxy compound (an amine-epoxy adduct system); a reaction product of an amine compound and an isocyanate compound or a urea compound (a urea adduct system); and the like.

Typical examples of commercially available latent curing catalysts for an epoxy resin include, but are not limited to, amine-epoxy adduct-based products (amine adducts) such as Ajicure PN-23 (trade name; Ajinomoto Fine-Techno Co., Inc.), Ajicure PN-40 (trade name; Ajinomoto Fine-Techno Co., Inc.), Ajicure PN-50 (trade name; Ajinomoto Fine-Techno Co., Inc.), Novacure HX-3742 (trade name; Asahi Kasei Corp.), Novacure HX-3721 (trade name; Asahi Kasei Corp.), Novacure HXA9322HP (trade name; Asahi Kasei Corp.), Novacure HXA3922HP (trade name; Asahi Kasei Corp.), Novacure HXA3932HP (trade name; Asahi Kasei Corp.), Novacure HXA5945HP (trade name; Asahi Kasei Corp.), Novacure HXA9382HP (trade name; Asahi Kasei Corp.), and Fujicure FXR1121 (trade name; T & K TOKA Co., Ltd.) and the like; and urea adduct-based products such as Fujicure FXE-1000 (trade name; T & K TOKA Co., Ltd.), Fujicure FXR-1030 (trade name; T & K TOKA Co., Ltd.) and the like. The curing catalysts can be used individually or in combination. As the curing catalyst, a solid dispersion-type amine adduct-based latent curing catalyst is preferable from the perspectives of pot life and curability.

The curing catalyst for an epoxy resin may be provided in the form of a dispersion dispersed in a polyfunctional epoxy resin. It should be noted that, if a curing catalyst in such a form is used, the amount of the polyfunctional epoxy resin in which it is dispersed is also included in the amount of the epoxy resin as the above-mentioned (C) thermosetting resin in the curable resin composition of the present invention.

• Pigment

The curable resin composition of the present invention may, if desired, comprise a pigment. The chromaticity of the curable resin composition of the present invention can be adjusted by incorporation of a pigment. By incorporation of a pigment into the curable resin composition of the present invention, unintended influence of light to an image sensor (imaging element) in a camera module can be further reduced. There is no particular limitation with respect to the pigment, and a black organic pigment, a mixed color organic pigment, and an inorganic pigment such as carbon black, titanium black and the like can be used. Examples of the black organic pigment include perylene black, aniline black and the like; examples of the mixed color organic pigment include those obtained by mixing at least two kinds of pigments selected from red, blue, green, purple, yellow, magenta, cyan and the like to obtain a pseudo-black color; and examples of the inorganic pigment include fine particles of graphite, metals and oxides (including complex oxides), sulfides, nitrides and the like of the metals. As examples of the metals, there can be mentioned titanium, copper, iron, manganese, cobalt, chromium, nickel, zinc, calcium, silver and the like. In the curable resin composition of the present invention, the pigments can be used individually or in combination. Further, the pigment may be used in combination with another colorant, such as a dye.

In the present invention, the pigment comprises preferably a black pigment, more preferably titanium black. In view of satisfying both of UV transparency and hiding properties, the average particle size of primary particles of the pigment is preferably 20 to 200 nm, more preferably 50 to 150 nm. As used herein, unless otherwise specified, the

average particle size of primary particles of the pigment refers to the volume-based median diameter ($d_{50}$) measured by laser diffractometry in accordance with ISO 13320:2009. When the measurement by laser diffractometry is difficult (for example, when the object to be measured comprises fine particles which are difficult to apply laser diffractometry), the average particle size of primary particles of the object to be measured may be measured by another method of measurement. As examples of other methods of measurement, there can be mentioned measurement by observation by a scanning electron microscope (SEM), dynamic light scattering, calculation from specific surface area, and the like. In the present invention, it is preferred that in such a case, the average particle size of primary particles of the object to be measured is calculated from the measurement by SEM observation.

• Filler

The curable resin composition of the present invention may, if desired, comprise a filler. If the curable resin composition of the present invention is used as a one-part adhesive, the addition of a filler thereto improves the moisture resistance and the thermal cycling resistance, especially the thermal cycling resistance, of the adhered region. The reason why addition of a filler improves thermal cycling resistance is because it decreases the coefficient of linear expansion of the cured product, that is, it suppresses the expansion and contraction of the cured product induced by thermal cycling.

There is no particular limitation with respect to the filler as long as it has an effect of reducing the coefficient of linear expansion, and various fillers can be used. As specific examples of fillers, there can be mentioned inorganic fillers, such as a silica filler, an alumina filler, a talc filler and a calcium carbonate filler; organic fillers, such as a polytetrafluoroethylene (PTFE) filler and an acryl polymer filler; and the like. Among these, preferred is an inorganic filler, especially a silica filler, a calcium carbonate filler or an alumina filler, and more preferred is a silica filler or a calcium carbonate filler.

Further, the filler may be surface-treated with a surface-treating agent, for example a coupling agent such as a silane coupling agent (which may have a substituent, such as a phenyl group, vinyl group, acryloyl group, methacryloyl group and the like). In the present invention, it is preferred that at least a portion of the filler is surface-treated.

There is no particular limitation with respect to the particle size distribution, average particle size or the like of the filler, but it is preferred that the filler with an average particle size of 5.0 μm or less is used. The average particle size of the filler is preferably 4.0 μm or less, more preferably 3.0 μm or less. If the average particle size is more than 5.0 μm, the depth of the preliminary curing is lowered and the preliminary curing becomes difficult. There is no particular limitation with respect to the lower limit of the average particle size. However, since an average particle size of less than 0.1 μm tends to result in increase in the viscosity, the average particle size is preferably 0.1 μm or greater, more preferably 0.2 μm or greater. In an embodiment, the average particle size of the filler used in the present invention is 0.1 μm or greater and 5.0 μm or less, preferably 0.2 μm or greater and 3.0 μm or less. As used herein, the average particle size of the filler, unless otherwise specified, refers to the volume-based median diameter ($d_{50}$) measured by laser diffractometry in accordance with ISO 13320:2009.

In view of discharging properties by a dispenser, it is preferred that particles of the filler used in the present invention are spherical.

When the curable resin composition of the present invention comprises a filler, the amount of the filler is preferably from 5 to 60 % by mass, more preferably from 10 to 50 % by mass, still more preferably from 10 to 30 % by mass, based on the total amount of the curable resin composition.

• Stabilizer

The curable resin composition of the present invention may, if desired, comprise a stabilizer. A stabilizer may be added to the curable resin composition of the present invention to improve its storage stability and to prolong its pot life. Various stabilizers known in the art as stabilizers for one-part adhesives may be used, and at least one selected from the group consisting of a liquid borate ester compound, an aluminum chelate and an organic acid is preferable because of their high effectiveness in improving storage stability.

As examples of liquid borate ester compounds, there can be mentioned 2,2'-oxybis(5,5'-dimethyl-1,3,2-oxaborinane), trimethyl borate, triethyl borate, tri-n-propyl borate, triisopropyl borate, tri-n-butyl borate, tripentyl borate, triallyl borate, trihexyl borate, tricyclohexyl borate, trioctyl borate, trinonyl borate, tridecyl borate, tridodecyl borate, trihexadecyl borate, trioctadecyl borate, tris(2-ethylhexyloxy)borane, bis(1,4,7,10-tetraoxaundecyl)(1,4,7,10,13-pentaoxatetradecyl)(1,4,7-trioxaundecyl)borane, tribenzyl borate, triphenyl borate, tri-o-tolyl borate, tri-m-tolyl borate, triethanolamine borate and the like. A liquid borate ester compound is preferable, because it is liquid at room temperature (25°C) and therefore allows the viscosity of a mixture comprising it to be kept low. As an example of the aluminum chelate that may be used, there can be mentioned aluminum chelate A (manufactured by Kawaken Fine Chemical Co., Ltd.). As an example of the organic acid that may be used, there can be mentioned barbituric acid.

When the curable resin composition of the present invention comprises a stabilizer, the amount of the stabilizer

is preferably 0.01 to 10 parts by mass, more preferably 0.05 to 5 parts by mass, still more preferably 0.1 to 3 parts by mass, with respect to 100 parts by mass of the total amount of components (A) to (D).

• Coupling agent

The curable resin composition of the present invention may, if desired, comprise a coupling agent. Addition of a coupling agent, in particular a silane coupling agent, is preferred from the perspective of improving adhesive strength. A silane coupling agent is an organosilicon compound having, in its molecule, two or more different functional groups including a functional group capable of being chemically bonded to an inorganic material and a functional group capable of being chemically bonded to an organic material. Generally, the functional group capable of being chemically bonded to an inorganic material is a hydrolysable silyl group, and a silyl group containing an alkoxy group, especially a methoxy group and/or an ethoxy group, is used as this functional group. As the functional group capable of being chemically bonded to an organic material, a vinyl group, an epoxy group, a (meth)acryl group, a styryl group, an unsubstituted or substituted amino group, a mercapto group, a ureido group, an isocyanate group or the like is used. As the coupling agent, various silane coupling agents having the above-mentioned functional group may be used. As specific examples of the silane coupling agent, there can be mentioned 3-glycidoxypropyltrimethoxysilane, 3-aminopropyltrimethoxysilane, vinyltrimethoxysilane, 3-triethoxysilyl-N-(1,3-dimethyl-butylidene)propylamine, 2-(3,4-epoxycyclohexyl)ethyltrimethoxysilane, p-styryltrimethoxysilane, 3-methacryloxypropylmethyltrimethoxysilane, 3-acryloxypropyltrimethoxysilane, 8-glycidoxyoctyltrimethoxysilane, 3-ureidopropyltriethoxysilane, 3-mercaptopropyltrimethoxysilane, bis(triethoxysilylpropyl)tetrasulfide, 3-isocyanatopropyltriethoxysilane and the like. These silane coupling agents may be used individually or in combination. In the present invention, the silane coupling agent (including that used for the surface treatment of the above-mentioned filler) is not included in components (A) to (D), even though the silane coupling agent has a reactive functional group, such as a (meth)acryloyl group or an epoxy group.

In the curable resin composition of the present invention, the amount of the coupling agent is preferably 0.01 to 10 parts by mass, more preferably from 0.1 to 5 parts by mass, with respect to 100 parts by mass of the total amount of components (A) to (D).

• Thixotropic agent

The curable resin composition of the present invention may, if desired, comprise a thixotropic agent. There is no particular limitation with respect to the thixotropic agent used in the present invention and any conventionally known ones may be used. Examples of the thixotropic agents used in the present invention include, but are not limited to, silica, bentonite, calcium carbonate and the like. In the present invention, it is preferred that the thixotropic agent comprises silica. Silica may be a natural silica (such as silica stone and quartz) or synthetic silica. Synthetic silica may be synthesized by any method, including a dry method and wet method.

Further, the thixotropic agent may be surface-treated with a surface-treating agent, for example a polydimethylsiloxane. In the present invention, it is preferred that at least a portion of the thixotropic agent is surface-treated. The average particle size of primary particles of the thixotropic agent is preferably 5 to 50 nm.

The curable resin composition of the present invention comprises the thixotropic agent in an amount of preferably from 0.1 to 30 % by weight, more preferably from 1 to 20 % by weight, especially preferably from 1 to 10 % by weight, based on the total weight amount of the curable resin composition.

• Other additives

The curable resin composition of the present invention may, if desired, comprise other additives, such as an ion trapping agent, a leveling agent, an antioxidant, an antifoaming agent, a flame retardant, a solvent and the like, insofar as they do not depart from the spirit of the present invention. The type and addition amount of each additive are in accordance with usual practice in the art.

There is no particular limitation with respect to the method for producing the curable resin composition of the present invention. For example, the curable resin composition of the present invention may be obtained by introducing components (A) to (D) and, if desired, other additives into a suitable mixer simultaneously or separately, followed by stirring and mixing while, if necessary, heating and melting, to yield a homogeneous composition. There is no particular limitation with respect to the mixer, and a Raikai mixer (grinder) equipped with a stirrer and a heater, a Henschel mixer, a three-roll mill, a ball mill, a planetary mixer, a bead mill or the like can be used. These devices may be used in combination, as appropriate.

As mentioned above, the thus obtained curable resin composition can be converted to the final cured product by subjecting the composition to 2-step curing treatment comprising:

· preliminary curing treatment by ultraviolet (UV) irradiation. and
· final curing treatment by heating.

The preliminary curing treatment can be carried out by subjecting, at ambient temperature, the curable resin composition of the present invention to ultraviolet light with a sufficient cumulative quantity of light. The irradiation intensity is preferably 100 to 10,000 mW/cm$^2$, more preferably 1,000 to 9,000 mW/cm$^2$. The wavelength of the ultraviolet light is preferably 315 to 450 nm, more preferably 340 to 430 nm, particularly preferably 350 to 380 nm. There is no particular limitation with respect to the light source of the ultraviolet light, and a high-pressure mercury lamp, metal halide lamp, gallium nitride-based UV-LED or the like can be used. The cumulative quantity of light for the ultraviolet light to which the curable resin composition of the present invention is subjected is preferably 200 mJ/cm$^2$ or more, more preferably 500 mJ/cm$^2$ or more, still more preferably 1,000 mJ/cm$^2$ or more, particularly preferably 2,000 mJ/cm$^2$ or more. There is no particular limitation with respect to the upper limit of the cumulative quantity of light, and the upper limit can be freely set as long as the purpose of the present invention is not impaired. The cumulative quantity of light for ultraviolet light can be measured using measuring instruments commonly used in the art, such as an accumulated ultraviolet meter and a light receiver. For example, the cumulative quantity of light for ultraviolet light in a wavelength range with a center wavelength of 365 nm (310 to 390 nm) can be measured using an accumulated ultraviolet meter (UIT-250 manufactured by Ushio Inc.) and a light receiver (UVD-S365 manufactured by Ushio Inc.).

On the other hand, the final curing treatment can be carried out by heating the curable resin composition of the present invention after the preliminary curing treatment under suitable conditions. This heating is carried out preferably at 60 to 120 °C, more preferably at 60 to 100 °C, particularly preferably at 70 to 90 °C. Further, this heating is carried out preferably for 5 to 180 minutes, more preferably for 10 to 120 minutes, particularly preferably for 20 to 70 minutes.

The curable resin composition of the present invention gives, after being subjected to the above-mentioned preliminary and final curing treatments, a cured product with lowered surface gloss. The structure present on the surface of this cured product has minute bumps, so that the reflection by this surface irradiated with light is mainly composed of diffuse reflection and specular reflection is lowered, which results in lowered gloss. An example of such a structure with minute bumps is shown in Figure 4. The mechanism of formation of this structure with minute bumps is speculated as follows. When the curable resin composition of the present invention is subjected to the preliminary curing treatment, a portion of (C) thermosetting resin not involved in the curing reaction appears on the surface of the resin composition as the minute discontinuous phase (after the curing, corresponding to black portions in Figure 4) dispersed in the continuous phase (after the curing, corresponding to white portions in Figure 4). These portions (discontinuous phase) are cured during the succeeding final curing treatment, and the surface having minute bumps is formed.

Therefore, in an assembly with its parts adhered using the curable resin composition of the present invention, a problem caused by specular reflection of light is solved. For example, in a camera module produced using the curable resin composition of the present invention, flare during imaging is drastically suppressed.

In the present invention, gloss of the surface of an object can be evaluated by specular glossiness measured at an incident angle of 60 degrees in accordance with the provisions of JIS Z 8741. This specular glossiness of the cured product given by the curable resin composition of the present invention is preferably 15 % or less, more preferably 10 % or less, still more preferably 5 % or less.

The curable resin composition of the present invention can be used as an adhesive or a sealing material. Specifically, the curable resin composition of the present invention can be used for the adhesion and sealing of components for camera modules.

For example, in the production of a camera module, the curable resin composition of the present invention can be used to adhere folder 70 to substrate 20, as illustrated in Fig. 1. The curable resin composition of the present invention can be used also to adhere lens barrel 60 to folder 70. The curable resin composition of the present invention can be used also to adhere optical filter 50 to folder 70. A jet dispenser, an air dispenser, or the like can be used to supply the resin composition to the adherend surface.

Further, in the present invention, also provided is the curable resin composition of the present invention for adhering folder 70 to substrate 20, lens barrel 60 to folder 70, or optical filter 50 to folder 70.

The curable resin composition of the present invention can be used, for example, as an adhesive for adhering a semiconductor device (especially that in which suppression of reflection of light inside that is important) comprising various electronic components and parts constituting an electronic component, or as a raw material thereof.

In the present invention, also provided is an adhesive comprising the curable resin composition of the present invention. The adhesive of the present invention is suitable for fixing, for example, parts constituting a camera module. In an embodiment of the present invention, the curable resin composition or adhesive of the present invention is for suppressing flare during imaging. In an embodiment of the present invention, also provided is the curable resin composition or adhesive of the present invention for giving a cured product having, on the surface thereof, a structure with minute bumps.

In the present invention, also provided is a cured product obtained by curing the curable resin composition or

adhesive of the present invention. Further, in the present invention, also provided is a camera module comprising the cured product of the present invention.

## EXAMPLES

Hereinafter, the present invention will be described by way of examples, but the present invention is not limited thereto. In the following examples, parts and percentages, unless otherwise specified, represent parts by mass and percentages by mass.

• Examples 1 to 13 and Comparative Examples 1 to 3

Curable resin compositions were prepared by mixing each of the components in the amounts according to the formulations shown in Table 1 using a three-roll mill. In Table 1, the amount of each component is expressed in parts by mass (unit: g).

(A) Polyfunctional thiol compound

The compounds used as (A) polyfunctional thiol compound in Examples and Comparative Examples are as follows.

(A-1) pentaerythritol tetrakis(3-mercaptopropionate) (trade name: PEMP, manufactured by SC Organic Chemical Co., Ltd., thiol equivalent weight: 122)
(A-2) pentaerythritol tripropanethiol (trade name: Multhiol Y-3, manufactured by SC Organic Chemical Co., Ltd., thiol equivalent weight: 140)

(B) Compound having a (meth)acrylate group

The compounds used as (B) compound having a (meth)acrylate group in Examples and Comparative Examples are as follows.

(B-1) polyfunctional acrylate compound 1 (trade name: ARONIX M-7100, manufactured by Toagosei Co., Ltd., (meth)acrylate equivalent weight: 188)
(B-2) polyfunctional acrylate compound 2 (trade name: Light Acrylate DCP-A, manufactured by Kyoeisha Chemical Co., Ltd., (meth)acrylate equivalent weight: 152)

(C) Thermosetting resin

The compounds used as (C) thermosetting resin in Examples and Comparative Examples are as follows.

(C-1) bisphenol F-based epoxy resin / bisphenol A-based epoxy resin mixture (trade name: EXA-835LV, manufactured by DIC Corporation, epoxy equivalent weight: 165)
(C-2) bisphenol A-based epoxy resin (trade name: jER834, manufactured by Mitsubishi Chemical Corporation, epoxy equivalent weight: 250)

(D) Photoradical initiator

The compound used as (D) photoradical initiator in Examples and Comparative Examples is as follows.
(D-1) 2-Methyl-1-[4-(methylthio)phenyl]-2-morpholinopropan-1-one (trade name: Omnirad 907, manufactured by IGM Resins B. V.)

(E) Curing Catalyst

The compounds used as (E) curing catalyst in Examples and Comparative Examples are as follows.

(E-1) amine-epoxy adduct-based latent curing catalyst (trade name: Novacure HXA9322HP, manufactured by Asahi Kasei Corp.)
(E-2) imidazole-based latent curing catalyst (trade name: Fujicure FXR1121, manufactured by T & K TOKA Co., Ltd.)

The latent curing catalyst (E-1) above is provided in the form of a dispersion (latent curing catalyst / mixture of bisphenol A-based epoxy resin and bisphenol F-based epoxy resin = 1/2 (mass ratio)) in which the latent curing catalyst in particulate form is dispersed in an epoxy resin (mixture of a bisphenol A-based epoxy resin and a bisphenol F-based epoxy resin (epoxy equivalent weight: 170)). The epoxy resins constituting this dispersion are treated as forming part of (C) thermosetting resin. Therefore, in Table 1, the amount of only the latent curing catalyst in (E-1) is shown in the row for (E) curing catalyst, and the amount of the epoxy resin in (E-1) is shown in the row for (C) thermosetting resin.

(F) Pigment

The compounds used as (F) pigment in Examples and Comparative Examples are as follows.

(F-1) titanium black (trade name: 13M, manufactured by Mitsubishi Materials Electronic Chemicals Co., Ltd.)
(F-2) carbon black (trade name: Black 4, manufactured by Orion Engineered Carbons S.A.)

(G) Filler

The compounds used as (G) filler in Examples and Comparative Examples are as follows.

(G-1) spherical silica (trade name: SE5200SEE, manufactured by Admatechs, average particle size: 2 μm)
(G-2) calcium carbonate (trade name: CS4NA, manufactured by Ube Material Industries, Ltd., average particle size: < 0.5 μm)

(Evaluation of the presence/absence of surface gloss of the cured product)

On a plane glass plate of 25 mm * 75 mm * 1.5 mm, a rectangle of 15 mm * 50 mm (thickness: 0.3 mm) was printed with a curable resin composition by stencil printing. Preliminary curing of the printed curable resin composition by UV irradiation was carried out using a UV LED irradiation device AC 475 manufactured by Exelitas Technologies Corp. at the cumulative quantity of light of 2,000 mJ/cm$^2$ (measured by UIT-250 manufactured by USHIO Inc. (to which a light receiver UVD-365 was connected)). Then, final curing of the curable resin composition after the preliminary curing was carried out for 60 minutes at 80 °C in a forced convection oven, and the resultant cured product on the glass plate was used as a test piece.

The test piece placed at the position below 1 m from indoor-use fluorescent lights (32 W * 2) was visually observed at an angle of about 30 degrees with respect to the surface of the glass plate to evaluate the presence/absence of surface gloss of the test piece. The results are shown in Table 1.

(Evaluation of the specular glossiness of the surface of the cured product)

Specular glossiness (%) of the surface of the test piece which was the same as that used in "Evaluation of the presence/absence of surface gloss of the cured product" above was measured using Gloss Checker IG-331 manufactured by HORIBA, Ltd. (light source: LED (wavelength 890 nm)) in accordance with the provisions of JIS Z 8741 under the conditions of an incident angle of 60 degrees and an acceptance angle of 60 degrees. The results are shown in Table 1.

(Evaluation of the adhesive strength by preliminary curing by UV irradiation)

On a stainless steel (SUS304) plate of 3 cm * 4 cm * 0.3 mm, circles of 2 mmϕ were printed with a curable resin composition by stencil printing. The shape of the printed curable resin composition was a circle of 2 mmϕ with a thickness of 0.13 mm. An alumina chip of 1.5 mm * 3 mm * 0.5 mm was put on each of the printed curable resin compositions. The alumina chips were adhered to the stainless steel plate by preliminary curing of the curable resin composition by UV irradiation using a UV LED irradiation device AC 475 manufactured by Exelitas Technologies Corp. at the cumulative quantity of light of 2,000 mJ/cm$^2$ (measured by UIT-250 manufactured by USHIO Inc. (to which a light receiver UVD-365 was connected)). With respect to each of the sites of adhering, shear strength (unit: N) was measured using a desktop universal tester (1605HTP, manufactured by Aikoh Engineering Co., Ltd.). The shear strength for each composition is the average of a plurality (n=10) of measured values. The results are shown in Table 1.

The adhesive strength by preliminary curing by UV irradiation is preferably 2.5 N or more, more preferably 5 N or more.

[Table 1-1]

Table 1

| | | Com. Ex. 1 | Com. Ex. 2 | Ex. 1 | Ex. 2 | Ex. 3 | Ex. 4 | Ex. 5 | Ex. 6 |
|---|---|---|---|---|---|---|---|---|---|
| (A) | (A-1) | 36.0 | 35.7 | 35.6 | 35.3 | 35.0 | 34.7 | 34.3 | 342 |
| | (A-2) | - | - | - | - | - | - | - | - |
| (B) | (B-1) | 41.4 | 38.7 | 36.5 | 322 | 27.8 | 23.3 | 18.8 | 16.5 |
| | (B-2) | - | - | - | - | - | - | - | - |
| (C) | (C-1) | 0.1 | 3.1 | 5.4 | 10.0 | 14.7 | 19.5 | 24.4 | 26.8 |
| | (C-2) | - | - | - | - | - | - | - | - |
| | Epoxy resin in (E-1) | 3.8 | 3.8 | 3.8 | 3.8 | 3.8 | 3.8 | 3.8 | 3.8 |
| (D) | (D-1) | 2.7 | 2.7 | 2.7 | 2.7 | 2.7 | 2.7 | 2.7 | 2.7 |
| (E) | (E-1)[(a)] | 1.9 | 1.9 | 1.9 | 1.9 | 1.9 | 1.9 | 1.9 | 1.9 |
| | (E-2) | - | - | - | - | - | - | - | - |
| (F) | (F-1) | 0.1 | 0.1 | 0.1 | 0.1 | 0.1 | 0.1 | 0.1 | 0.1 |
| | (F-2) | - | - | - | - | - | - | - | - |
| (G) | (G-1) | 14.0 | 14.0 | 14.0 | 14.0 | 14.0 | 14.0 | 14.0 | 14.0 |
| | (G-2) | - | - | - | - | - | - | - | - |
| Total | | 100.0 | 100.0 | 100.0 | 100.0 | 100.0 | 100.0 | 100.0 | 100.0 |
| Mass ratio (%)[(b)] | | 9 | 15 | 20 | 30 | 40 | 50 | 60 | 65 |
| Gloss (visual observation) | | Present | Present | Absent | Absent | Absent | Absent | Absent | Absent |
| Specular glossiness | | 30 | 22 | 15 | 10 | 5 | 0 | 0 | 0 |
| Adhesive strength (N) | | 30 | 24 | 19 | 14 | 12 | 9 | 6 | 3 |

(a) Mass of only the latent curing catalyst
(b) [Mass of (C) thermosetting resin] * 100 / ([Mass of (B) compound having a (meth)acrylate group] + [Mass of (C) thermosetting resin])

Table 1 (continued)

| | | Com. Ex. 3 | Ex. 7 | Ex. 8 | Ex. 9 | Ex. 10 | Ex. 11 | Ex. 12 | Ex. 13 |
|---|---|---|---|---|---|---|---|---|---|
| (A) | (A-1) | 34.0 | 34.7 | 34.7 | 34.7 | 34.7 | 32.3 | 24.9 | - |
| | (A-2) | - | - | - | - | - | - | - | 25.1 |
| (B) | (B-1) | 14.2 | 23.3 | 23.3 | 23.3 | 23.3 | 24.5 | - | 28.1 |
| | (B-2) | - | - | - | - | - | - | 28.2 | - |
| (C) | (C-1) | 29.3 | 19.5 | 19.5 | 23.3 | 19.5 | - | 24.4 | 24.3 |
| | (C-2) | - | - | - | - | - | 20.7 | - | - |
| | Epoxy resin in (E-1) | 3.8 | 3.8 | 3.8 | - | 3.8 | 3.8 | 3.8 | 3.8 |
| (D) | (D-1) | 2.7 | 2.7 | 2.7 | 2.7 | 2.7 | 2.7 | 2.7 | 2.7 |
| (E) | (E-1)[(a)] | 1.9 | 1.9 | 1.9 | - | 1.9 | 1.9 | 1.9 | 1.9 |
| | (E-2) | - | - | - | 1.9 | - | - | - | - |

(continued)

| Table 1 (continued) | | | | | | | | | |
|---|---|---|---|---|---|---|---|---|---|
| | | Com. Ex. 3 | Ex. 7 | Ex. 8 | Ex. 9 | Ex. 10 | Ex. 11 | Ex. 12 | Ex. 13 |
| (F) | (F-1) | 0.1 | - | - | - | 0.1 | 0.1 | 0.1 | 0.1 |
| | (F-2) | - | - | 0.1 | 0.1 | - | - | - | - |
| (G) | (G-1) | 14.0 | 14.0 | 14.0 | 14.0 | - | 14.0 | 14.0 | 14.0 |
| | (G-2) | - | - | - | - | 140 | - | - | - |
| Total | | 100.0 | 99.9 | 100.0 | 100.0 | 100.0 | 100.0 | 100.0 | 100.0 |
| Mass ratio (%)[(b)] | | 70 | 50 | 50 | 50 | 50 | 50 | 50 | 50 |
| Gloss (visual observation) | | Absent | Absent | Absent | Absent | Absent | Absent | Absent | Absent |
| Specular glossiness | | 0 | 0 | 0 | 0 | 0 | 0 | 0 | 0 |
| Adhesive strength (N) | | 0 | 9 | 9 | 9 | 7 | 15 | 9 | 4 |
| (a) Mass of only the latent curing catalyst<br>(b) [Mass of (C) thermosetting resin] * 100 / ([Mass of (B) compound having a (meth)acrylate group] + [Mass of (C) thermosetting resin]) | | | | | | | | | |

(Observation of the surface of the cured product)

A photograph showing the appearance of cured product A obtained as described in "Evaluation of the presence/absence of surface gloss of the cred product" above using the curable resin composition of Example 4 as the curable resin composition is shown in Figure 2. A photograph showing the appearance of cured product B obtained in substantially the same manner as described above except that the curable resin composition of Comparative Example 1 was used as the curable resin composition is shown in Figure 3.

Further, an optical micrograph of the surface of cured product A is shown in Figure 4, and an optical micrograph of the surface of cured product B is shown in Figure 5. Each of Figures 4 and 5 was photographed at the object lens magnification of 20, and the width (horizontal length) thereof corresponds to 0.7 mm.

The curable resin composition of the present invention provides satisfactory adhesive strength after preliminary curing and gives a cured product with lowered surface gloss, whereas a curable resin composition falling outside of the scope of the present invention provides unsatisfactory adhesive strength after preliminary curing or gives a cured product with unsatisfactorily lowered surface gloss.

Further, microscopic observation of the surface of each of cured product A of an Example and cured product B of a Comparative Example shows that the surface of each of them is not completely flat. However, the former has a structure in which bumps are significantly conspicuous, as compared to those in the latter. This is believed to bring the situation that the specular glossiness of the cured product of an Example is significantly lowered whereas the specular glossiness of the cured product of a Comparative Example is not satisfactorily lowered.

INDUSTRIAL APPLICABILITY

The curable resin composition of the present invention comprises, in addition to a polyfunctional thiol compound and a compound having a (meth)acrylate group which reacts with this compound, a thermosetting resin other than the latter compound, which resin is capable of reacting with the former compound, such as an epoxy resin, in a specific amount. Therefore, the curable resin composition of the present invention gives a cured product with lowered surface gloss. Such a curable resin composition is extremely useful in the production of various semiconductor devices for use in which reflection of light on the surface of the cured product given by the composition may be a problem, especially a camera module.

REFERENCE SIGNS LIST

1 Camera module

10 Cured product of adhesive
20 Substrate
30 Image sensor
40 Optical lens
50 Optical filter
60 Lens barrel
70 Folder

## Claims

1. A curable resin composition comprising the following (A) to (D):

   (A) a polyfunctional thiol compound;
   (B) a compound having a (meth)acrylate group;
   (C) a thermosetting resin having a functional group capable of reacting with the (A) polyfunctional thiol compound but no (meth)acrylate group; and
   (D) a photoradical initiator,
   wherein:

   [Mass of (C) thermosetting resin] / ([Mass of (B) compound having a (meth)acrylate group] + [Mass of (C) thermosetting resin]) = 0.20 to 0.65.

2. The curable resin composition according to claim 1, wherein:

   [Mass of (C) thermosetting resin] / ([Mass of (B) compound having a (meth)acrylate group] + [Mass of (C) thermosetting resin]) = 0.30 to 0.60.

3. The curable resin composition according to claim 1 or 2, wherein:

   ([Total number of (meth)acrylate groups contained in (B) compound having a (meth)acrylate group] + [Total number of the functional groups contained in (C) thermosetting resin, the functional groups capable of reacting with (A) polyfunctional thiol compound]) / [Total number of thiol groups contained in (A) polyfunctional thiol compound] = 0.5 to 1.5.

4. The curable resin composition according to any one of claims 1 to 3, wherein (B) compound having a (meth)acrylate group comprises a polyfunctional acrylate compound.

5. The curable resin composition according to any one of claims 1 to 4, wherein (C) thermosetting resin comprises an epoxy resin.

6. The curable resin composition according to any one of claims 1 to 5, which further comprises (E) a curing catalyst.

7. The curable resin composition according to any one of claims 1 to 6, which further comprises (F) a pigment.

8. The curable resin composition according to claim 7, wherein (F) pigment comprises a black pigment.

9. The curable resin composition according to any one of claims 1 to 8, which further comprises (G) a filler.

10. The curable resin composition according to any one of claims 1 to 9, which gives a cured product with a specular glossiness of 15 % or less measured at an incident angle of 60 degrees in accordance with the provisions of JIS Z 8741.

**11.** The curable resin composition according to any one of claims 1 to 10 for adhering, in a camera module, a folder to a substrate, a lens barrel to a folder, or an optical filter to a folder.

**12.** An adhesive comprising the curable resin composition of any one of claims 1 to 11.

**13.** A cured product of the curable resin composition of any one of claims 1 to 11 or the adhesive of claim 12.

**14.** A camera module comprising the cured product of claim 13.

Fig. 1

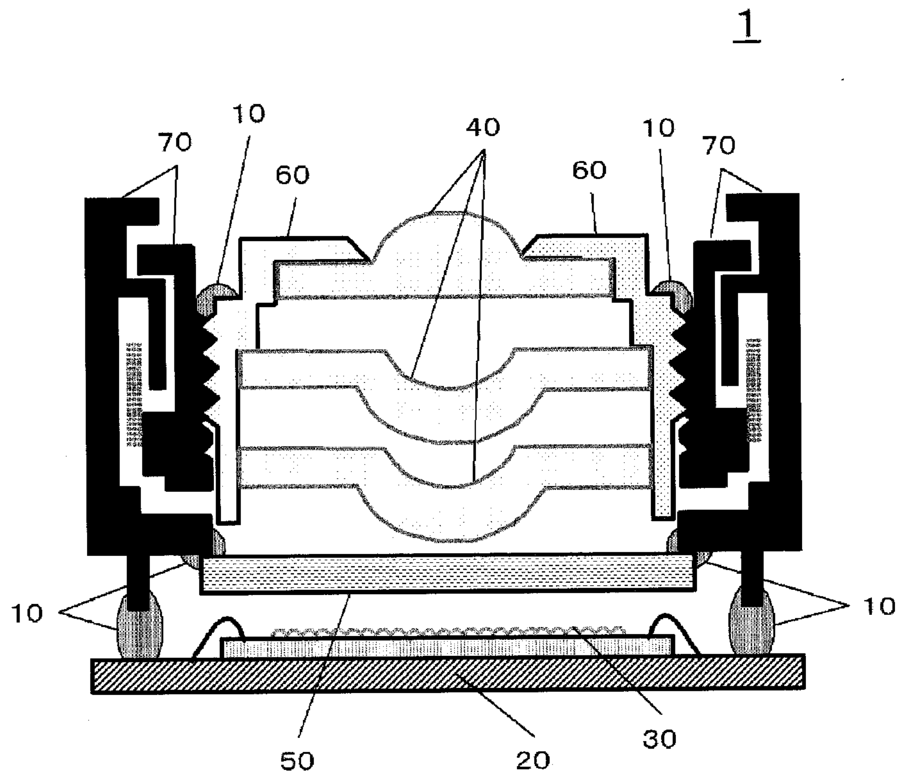


Fig. 2

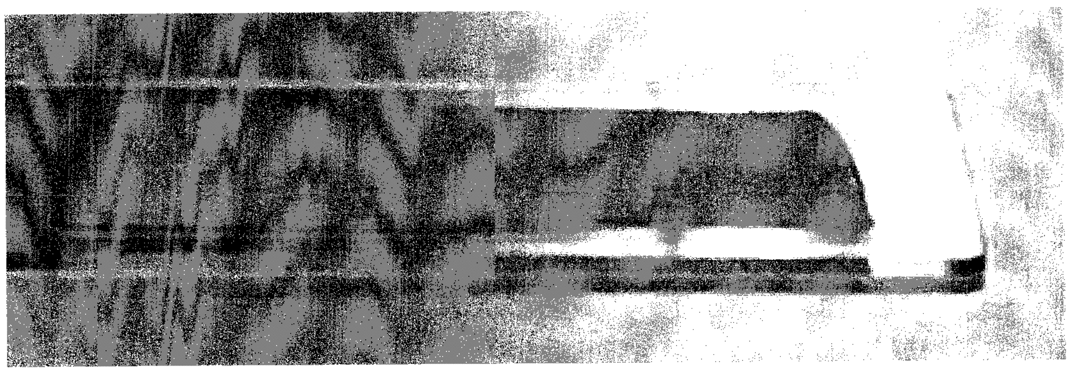

Fig. 3

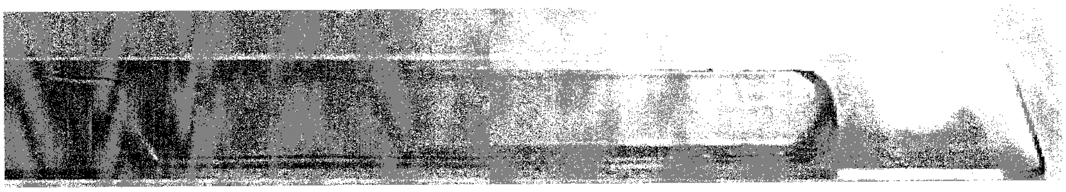

Fig. 4

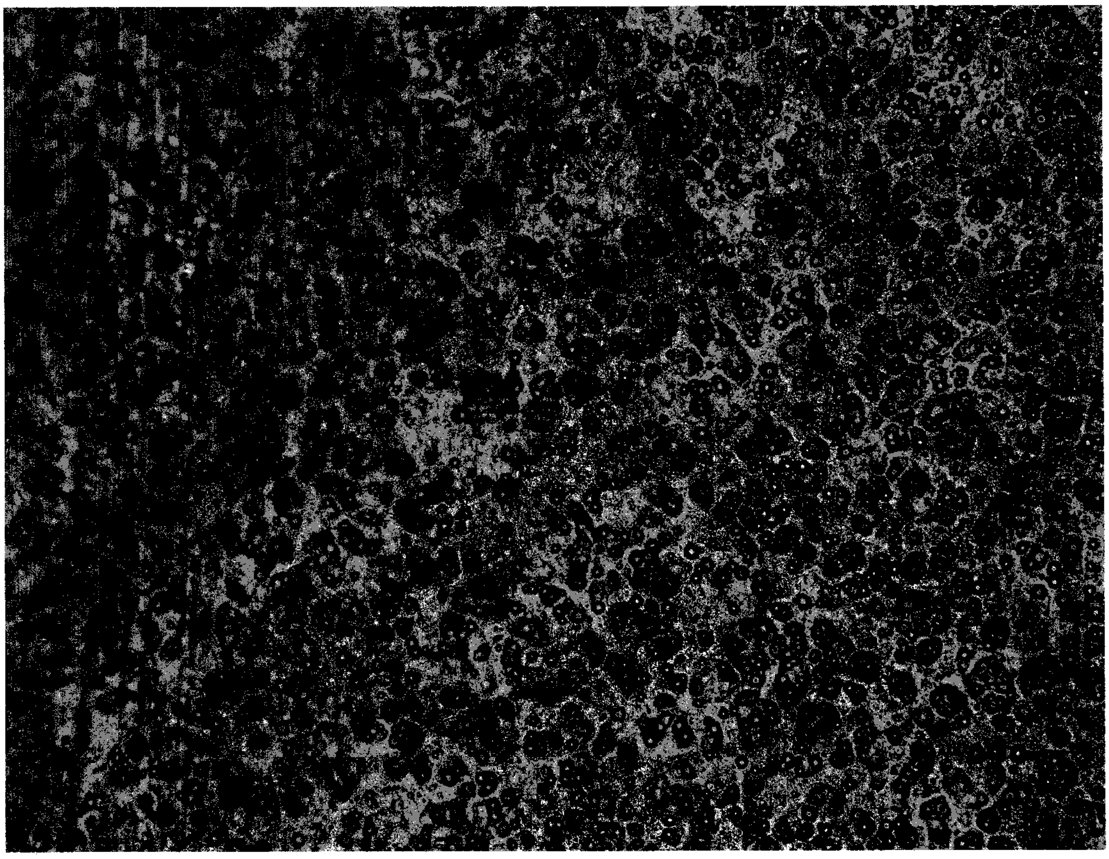

Fig. 5

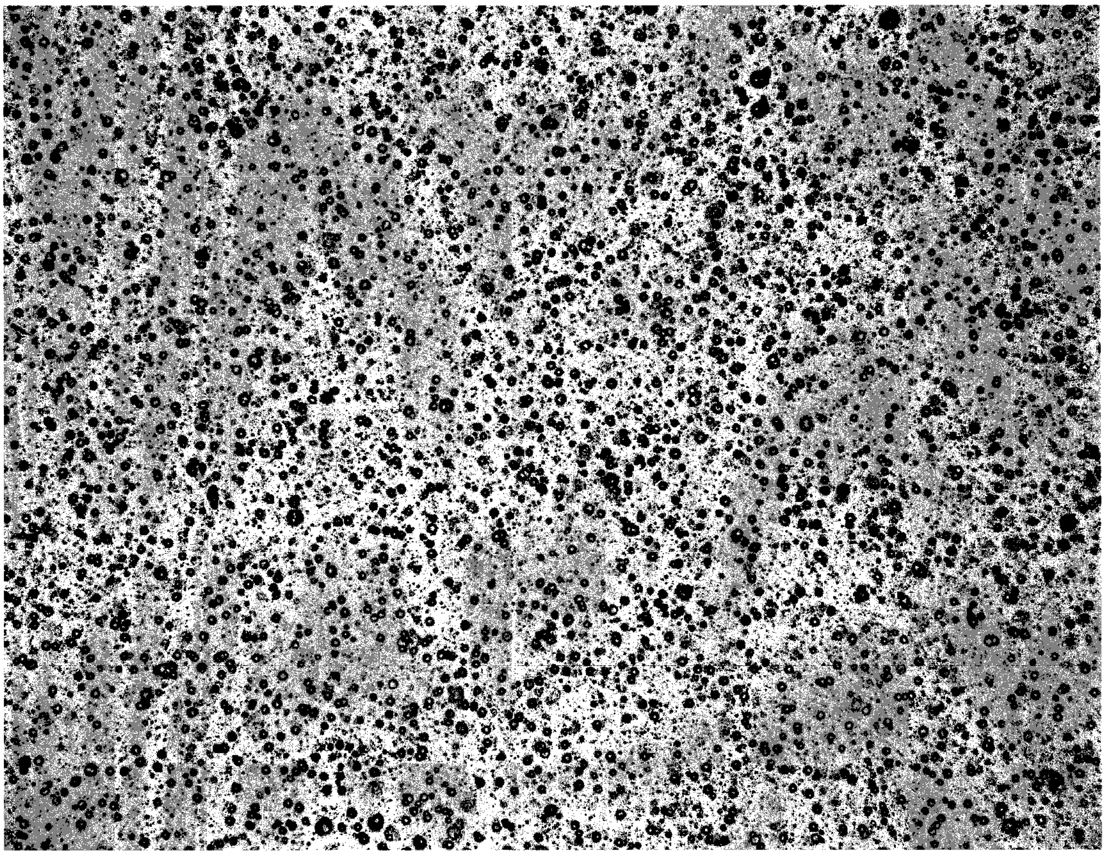

**INTERNATIONAL SEARCH REPORT**

International application No. **PCT/JP2022/013960**

**A. CLASSIFICATION OF SUBJECT MATTER**

***C08G 59/18***(2006.01)i; ***C09J 4/02***(2006.01)i; ***C09J 11/06***(2006.01)i; ***G03B 11/04***(2021.01)i; ***G03B 17/02***(2021.01)i; ***C08K 5/37***(2006.01)i; ***C08L 101/06***(2006.01)i; ***C09J 163/00***(2006.01)i; ***C08L 63/00***(2006.01)i; ***C08G 75/045***(2016.01)i; ***C08K 3/013***(2018.01)i; ***G02B 7/02***(2021.01)i

FI: C08L101/06; C08K3/013; C08L63/00 Z; C08K5/37; C08G75/045; C09J4/02; C09J11/06; C09J163/00; G02B7/02 A; G02B7/02 Z; G03B11/04 Z; G03B17/02; C08G59/18

According to International Patent Classification (IPC) or to both national classification and IPC

**B. FIELDS SEARCHED**

Minimum documentation searched (classification system followed by classification symbols)

C08G59/18; C09J4/02; C09J11/06; G03B11/04; G03B17/02; C08K5/37; C08L101/06; C09J163/00; C08L63/00; C08G75/045; C08K3/013; G02B7/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2016-138191 A (NOF CORP.) 04 August 2016 (2016-08-04) claims, paragraph [0042], examples | 1-6, 12, 13<br>7-11, 14 |
| X | JP 2017-101112 A (AJINOMOTO CO., INC.) 08 June 2017 (2017-06-08) claims, paragraph [0090], examples | 1-14 |
| X<br>A | JP 2019-77740 A (NIPPON KAYAKU CO., LTD.) 23 May 2019 (2019-05-23) claims, paragraph [0035], examples | 1-10, 12, 13<br>11, 14 |
| X<br>A | JP 2020-147643 A (NIPPON KAYAKU CO., LTD.) 17 September 2020 (2020-09-17) claims, paragraph [0036], examples | 1-10, 12, 13<br>11, 14 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 June 2022** | **14 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/013960**

**C. DOCUMENTS CONSIDERED TO BE RELEVANT**

| Category* | Citation of document, with indication, where appropriate, of the relevant passages | Relevant to claim No. |
|---|---|---|
| P, X | JP 2021-75698 A (AJINOMOTO CO., INC.) 20 May 2021 (2021-05-20) claims, paragraph [0096], examples | 1-14 |
| P, X | JP 2021-75699 A (AJINOMOTO CO., INC.) 20 May 2021 (2021-05-20) claims, paragraph [0093], examples | 1-14 |
| P, X | WO 2022/024838 A1 (PANASONIC INTELLECTUAL PROPERTY MANAGEMENT CO., LTD.) 03 February 2022 (2022-02-03) claims, paragraph [0064], examples | 1-14 |
| A | WO 2008/102550 A1 (MITSUI CHEMICALS INC.) 28 August 2008 (2008-08-28) entire text | 1-14 |
| A | WO 2017/200082 A1 (SHOWA DENKO K.K.) 23 November 2017 (2017-11-23) entire text, all drawings | 1-14 |
| A | JP 2018-203910 A (NIPPON KAYAKU CO., LTD.) 27 December 2018 (2018-12-27) entire text | 1-14 |
| A | JP 2019-91086 A (SEKISUI CHEMICAL CO., LTD.) 13 June 2019 (2019-06-13) entire text | 1-14 |

Form PCT/ISA/210 (second sheet) (January 2015)

**INTERNATIONAL SEARCH REPORT**
**Information on patent family members**

International application No.
**PCT/JP2022/013960**

| Patent document cited in search report | Publication date (day/month/year) | Patent family member(s) | Publication date (day/month/year) |
|---|---|---|---|
| JP 2016-138191 A | 04 August 2016 | CN 106029731 A<br>KR 10-2017-0036718 A<br>TW 201725232 A | |
| JP 2017-101112 A | 08 June 2017 | KR 10-2017-0063401 A<br>CN 107011514 A<br>TW 201731962 A | |
| JP 2019-77740 A | 23 May 2019 | (Family: none) | |
| JP 2020-147643 A | 17 September 2020 | (Family: none) | |
| JP 2021-75698 A | 20 May 2021 | CN 112745770 A<br>KR 10-2021-0052343 A | |
| JP 2021-75699 A | 20 May 2021 | CN 112745793 A<br>KR 10-2021-0052344 A | |
| WO 2022/024838 A1 | 03 February 2022 | (Family: none) | |
| WO 2008/102550 A1 | 28 August 2008 | CN 101617267 A<br>KR 10-2009-0112710 A<br>TW 200900816 A | |
| WO 2017/200082 A1 | 23 November 2017 | CN 109071777 A<br>KR 10-2018-0135916 A<br>TW 201811855 A | |
| JP 2018-203910 A | 27 December 2018 | (Family: none) | |
| JP 2019-91086 A | 13 June 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016143815 A
- WO 2016143777 A
- JP H10275964 B
- JP 2012153794 A